**Europäisches Patentamt**

**European Patent Office**

**Office européen des brevets**

(19)

(11) Numéro de publication : **0 325 518 B1**

# (12) FASCICULE DE BREVET EUROPEEN

(45) Date de publication du fascicule du brevet :
**11.03.92 Bulletin 92/11**

(51) Int. Cl.$^5$ : **F16J 13/24,** F16L 47/00,
F17C 13/12

(21) Numéro de dépôt : **89400113.0**

(22) Date de dépôt : **13.01.89**

(54) **Récipient démontable, pouvant supporter une pression interne.**

(30) Priorité : **20.01.88 FR 8800590**

(43) Date de publication de la demande :
**26.07.89 Bulletin 89/30**

(45) Mention de la délivrance du brevet :
**11.03.92 Bulletin 92/11**

(84) Etats contractants désignés :
**DE ES FR GB IT**

(56) Documents cités :
**FR-A- 2 328 918**
**GB-A- 540 036**
**US-A- 2 439 910**
**US-A- 3 214 054**
**US-A- 4 267 940**

(73) Titulaire : **TECNOMA**
**54, Rue Marcel Paul**
**F-51206 Epernay (FR)**

(72) Inventeur : **Ballu, Patrick Jean-Marie**
**4 rue du Général Baratier**
**F-51100 Reims (FR)**

(74) Mandataire : **Colas, Jean-Pierre et al**
**Cabinet de Boisse 37, avenue Franklin D.**
**Roosevelt**
**F-75008 Paris (FR)**

## Description

La présente invention est relative à un récipient démontable en deux éléments, destiné à supporter une pression interne et comprenant un premier élément dont une partie cylindrique pénètre dans une partie cylindrique d'un second élément, et un joint d'étanchéité intercalé entre ces deux parties cylindriques.

Lorsque la ligne de jonction des deux éléments d'un récipient résistant à la pression et en deux parties présente une longueur importante, on a souvent recours à une liaison par flasques parallèles entre lesquels est interposé un joint. Cette disposition est sûre, mais lourde et encombrante, et les opérations de montage et démontage du récipient sont longues. Cela est en particulier le cas lorsque le récipient, qui est par exemple cylindrique avec deux fonds éventuellement bombés, comprend deux éléments réunis dans la partie de diamètre maximal, pour faciliter les inspections et nettoyages par exemple. Un des deux éléments au moins peut présenter des orifices obturables de plus petit diamètre pour le remplissage ou le vidage, l'obturation de ces orifices présente en général des problèmes moins aigus.

Les récipients démontables qui font appel à la pénétration d'une partie cylindrique (partie mâle) dans une autre (partie femelle) sont moins lourds et moins encombrants, grâce à l'absence des flasques, qui ne participent pas à la limitation de l'espace intérieur du récipient. Ils présentent surtout l'avantage de permettre des montages et démontages rapides. En revanche, ils présentent le risque, inhérent à un démontage rapide, que ce démontage ait lieu alors que le récipient est encore sous pression, ce qui peut provoquer des accidents. En outre, ils sont relativement sensibles aux déformations sous l'effet de la pression, et, si ces déformations deviennent permanentes, elles peuvent gêner un démontage et un remontage ultérieur.

Ces derniers inconvénients sont peu fréquents avec des récipients rigides, et notamment métalliques, mais ils deviennent plus visibles avec des récipients en matière souple, telle qu'une matière plastique, qui sont de plus en plus utilisés.

Le document US-A-3 214 054 décrit un récipient démontable du type indiqué au début, et dans lequel la surface extérieure de l'élément femelle porte des moyens d'accrochage aptes à coopérer avec des moyens d'accrochage prévus sur un organe de liaison solidaire en translation axiale de l'élément mâle, la disposition de ces moyens d'accrochage réalise une liaison à baïonnette. Il est dit que, lorsque le récipient est soumis à une pression interne, le frottement entre les parties de cette liaison à baïonnette devient tel que l'ouverture du récipient par inadvertance est empêchée.

Le document US-A-4 267 940 décrit un récipient du même type, mais dans lequel une ouverture sous pression est interdite par le fait que des pièces de maintien coopèrent avec des flasques portés par les éléments mâle et femelle et présentant des surfaces qui divergent vers l'extérieur, si bien que l'écartement de ces flasques qui résulte de la mise en pression du récipient a pour effet de mettre en tension les pièces de maintien en s'opposant à leur déplacement vers l'extérieur.

Ces deux documents ne prennent pas en compte les déformations qui résultent de la mise en pression du récipient, et qui pourrait altérer gravement les résultats obtenus si les solutions proposées étaient appliquées à des récipients en matière souple.

Le but de l'invention est de fournir un récipient du type des documents précités, dans lequel la déformabilité de la matière utilisée soit largement prise en compte, pour permettre l'utilisation de matière déformable sans diminution de la sécurité.

Un autre but de l'invention est de fournir un tel récipient dont les possibilités de montage et de démontage rapide ne soient pas altérées par une utilisation prolongée sous pression, entraînant un fluage de la matière.

Un autre but de l'invention est de fournir un tel récipient qui soit simple et peu coûteux à fabriquer, de préférence en matière plastique.

Pour atteindre ces buts, l'invention fournit un récipient démontable, destiné à supporter une pression interne et comprenant un élément mâle dont une partie cylindrique pénètre dans une partie cylindrique d'un élément femelle, et un joint d'étanchéité intercalé entre ces deux parties cylindriques, dans lequel la surface extérieure de l'élément femelle porte des moyens d'accrochage aptes à coopérer avec des moyens d'accrochage prévus sur un organe de liaison solidaire en translation axiale de l'élément mâle, et caractérisé en ce que l'épaisseur de l'élément femelle est calculée pour que, lorsque ladite pression interne déterminée est appliquée au récipient, celui-ci se déforme pour rendre impossible l'actionnement des moyens d'accrochage en vue de l'ouverture du récipient.

Suivant une modalité avantageuse, la distance entre les moyens d'accrochage portés par l'élément femelle et le bord de cet élément est supérieure à la distance entre le joint d'étanchéité et le même bord de l'élément femelle.

De cette façon, l'amplitude de la déformation est plus grande à l'endroit des moyens d'accrochage, où elle est utile, qu'à l'endroit du joint d'étanchéité où elle n'est pas désirée.

Selon un premier mode de réalisation de l'invention, les moyens d'accrochage porté par l'élément femelle sont constitués par un filetage mâle calculé pour coopérer sans effort avec un filetage femelle porté par l'organe de liaison lorsque la pression interne est faible ou nulle, et pour se coïncer dans ledit filetage femelle lorsque la pression interne est élevée. Dans ce cas, il est avantageux de prévoir au moins une butée qui limite le vissage de l'organe de liaison sur le filetage de l'élément femelle.

Cette dernière précaution permet d'avoir toujours un démontage facile même après un temps de pression prolongé, ce qui ne serait pas le cas avec un vissage limité par l'arrivée en bout de filetage, surtout si la matière a subi un fluage causé par la pression.

Selon un second mode de réalisation de l'invention moins sûr, surtout pour les grandes dimensions et les fortes déformations, mais de réalisation plus facile et permettant des montages et démontages plus rapides encore, les moyens d'accrochage forment un assemblage du type à baïonnette et comprennent, sur l'élément femelle, des saillants dirigés radialement vers l'extérieur et calculés pour coopérer avec un relief adapté de l'organe de liaison, cet organe de liaison comportant, en outre, au moins une surface d'appui qui est serrée contre une surface extérieure de l'élément femelle lorsque celui-ci est déformé par la pression.

Selon un troisième mode de réalisation de l'invention un peu plus compliqué mais mieux adapté aux récipients de grandes dimensions, les moyens d'accrochage portés par l'élément femelle comprennent un système de serrage comprenant au moins une bride articulée sur un levier articulé lui-même sur l'élément femelle, la bride coopérant avec un crochet porté par l'organe de liaison, l'immobilisation relative des éléments étant obtenue par dépassement d'un point mort par le levier, la déformation de l'élément femelle sous l'effet de la pression entraînant une augmentation du dépassement de point mort. De préférence, la déformation de l'élément femelle sous l'effet de la pression déplace l'extrémité du levier qui est opposée à son articulation sur l'élément femelle et rapproche cette extrémité de l'élément femelle ou la serre contre celui-ci, rendant difficile ou impossible l'actionnement dudit levier quand le récipient est sous pression.

En ce qui concerne l'organe de liaison, suivant une première modalité, il est constitué par une bague qui peut tourner autour de la partie cylindrique de l'élément mâle. Il est possible de prévoir qu'il y a, entre l'organe de liaison et l'élément mâle, un jeu suffisant pour que les déformations de ce dernier n'aient aucune action sur l'élément de liaison.

Suivant une autre modalité, l'organe de liaison est une jupe solidaire de l'élément mâle. Cette réalisation permet de mouler en une seule opération l'élément mâle et l'organe de liaison. En revanche, il est plus difficile d'assurer que les déformations de l'élément mâle n'influencent pas l'organe de liaison.

L'invention peut aussi être réalisée d'une manière différente, particulièrement adaptée à des récipients de très grand diamètre, sous pression relativement modérée. On prévoit, dans ce cas, que les moyens d'accrochage portés par l'élément mâle consistent en une nervure radiale le long du bord de cet élément, l'organe de liaison est constitué par une bride circulaire à gorge qui vient entourer ladite nervure et une nervure similaire de l'élément mâle, cette bride présentant au moins une discontinuité sur sa périphérie, les deux côtés de cette discontinuité étant réunis par un système de serrage qui se bloque lorsque la longueur périphérique de la bride augmente sous l'effet de la pression interne. De préférence, le système de serrage comprend une bride articulée sur un levier lui-même articulé sur un premier tronçon et un crochet porté par l'autre tronçon, l'immobilisation relative des éléments mâle et femelle étant obtenue par dépassement d'un point mort du levier, la déformation de l'élément femelle, et éventuellement aussi de l'élément mâle, sous l'effet de la pression entraînant une augmentation du dépassement du point mort. Avantageusement, la déformation de l'élément femelle sous l'effet de la pression déplace l'extrémité du levier qui est opposée à son articulation sur le premier tronçon et rapproche cette extrémité dudit premier tronçon ou la serre contre celui-ci, rendant difficile ou impossible l'actionnement dudit levier quand le récipient est sous pression.

De préférence aussi, la bride circulaire est en plusieurs tronçons articulés, surtout si le récipient est de grand diamètre.

L'invention va maintenant être exposée de façon plus détaillée à l'aide d'exemples illustrés avec les dessins, parmi lesquels :

Figure 1 est une coupe axiale partielle d'un récipient selon l'invention,

Figure 2 est une coupe partielle transversale selon la ligne II-II de la figure 1,

Figures 3 à 7 sont des coupes partielles, analogues à celle de la figure 1, schématisée, et relative à des variantes,

Figure 8 est une vue schématique axiale du dispositif de la figure 7, à plus petite échelle.

Figures 9 et 10 sont des coupes axiales partielles montrant des variantes de disposition du joint.

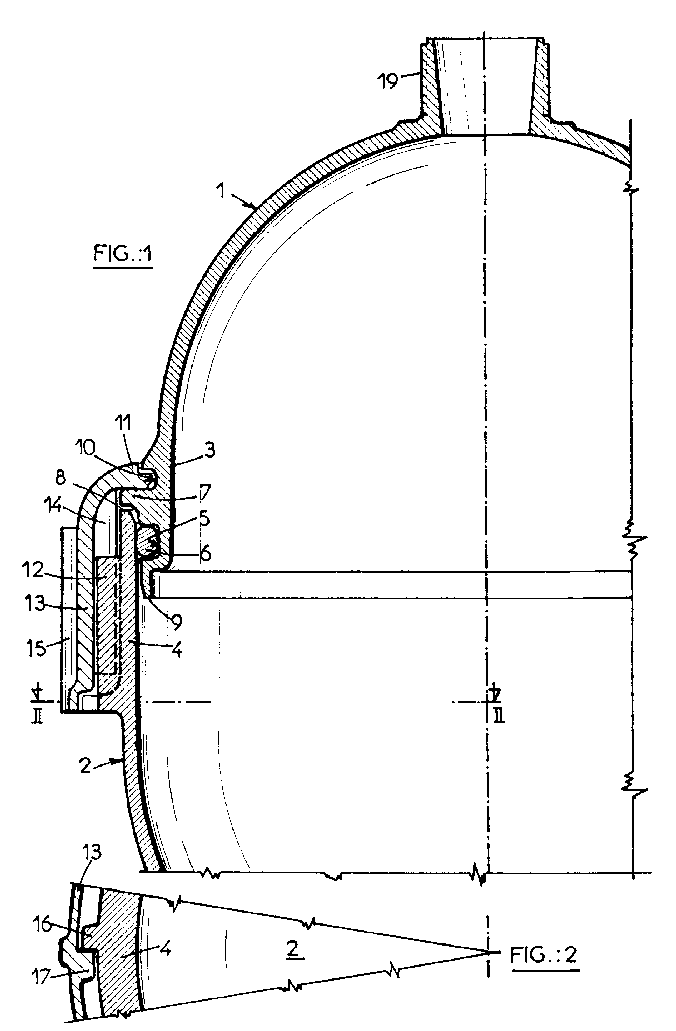

Le récipient de la figure 1 est formé de deux éléments, 1, 2, qui sont chacun formé d'un partie en demi-sphère prolongée par une partie cylindrique. Le diamètre extérieur de la partie cylindrique 3 de l'élément 1 est légèrement inférieur au diamètre intérieur de la partie cylindrique 4 de l'élément 2. L'élément 1 constitue donc l'élément mâle et l'élément 2 l'élément femelle.

La partie cylindrique 3 de l'élément mâle présente une gorge radiale 5 qui contient un joint torique 6, lequel, lorsque les deux éléments sont assemblés, est serré contre la partie cylindrique 4, et constitue le joint d'étanchéité.

La partie cylindrique 3 présente, en outre, une nervure annulaire 7, en saillie vers l'extérieur, et qui constitue une butée limitant l'enfoncement de l'élément mâle 1 dans l'élément femelle 2, en venant en appui contre le bord 8 de l'élément femelle. Cette nervure est, évidemment, à une distance du bord 9 de l'élément mâle supérieure à celle de la gorge 5.

Au-delà de la nervure 7, en partant du bord 9, se trouve une seconde rainure annulaire 10, ouverte vers l'extérieur, et dans laquelle est montée, avec encliquetage, une bague 11 qui constitue l'organe de liaison. Cette bague 11 ne peut s'échapper de la rainure 10, mais peut cependant tourner librement autour de l'élément 1. La face intérieure de la partie cylindrique 4, qui vient en contact avec le joint d'étanchéité 6, est lisse et continue. La face extérieure de cette partie cylindrique 4 porte un filetage 12, qui s'étend dans son ensemble à une distance du bord 8 de la partie cylindrique 4 supérieure à la distance du joint torique 6 à la nervure-butée 7. Ce filetage 12 est, nécessairement, un filetage mâle.

La bague 11 a, en section, une forme incurvée, avec une partie dirigée radialement qui pénètre dans la nervure 10 et une partie cylindrique, qui s'étend parallèlement à la partie cylindrique 3, et lorsque les deux éléments sont assemblés, à la partie cylindrique 4. Cette partie cylindrique 13 porte sur sa face axialement intérieure, un taraudage 14, conçu pour coopérer avec le filetage 12 porté par l'élément femelle. Sur sa face extérieure, la partie 13 porte des nervures axiales 15, destinées à faciliter son entraînement en rotation.

Comme le montre mieux la figure 2, la partie cylindrique 4 porte, en-dessous du filetage 12, c'est-à-dire au-delà de celui-ci en partant du bord 8, une butée 16, dirigée radialement vers l'extérieur. Vers son bord le plus éloigné de la rainure 10, la bague 11 porte une butée 17, dirigée radialement vers l'intérieur. Au cours du vissage de la bague 11 sur le filetage 12, les butée 16 et 17 se rencontrent, ce qui interrompt le vissage, bien avant qu'on arrive en fin de filetage.

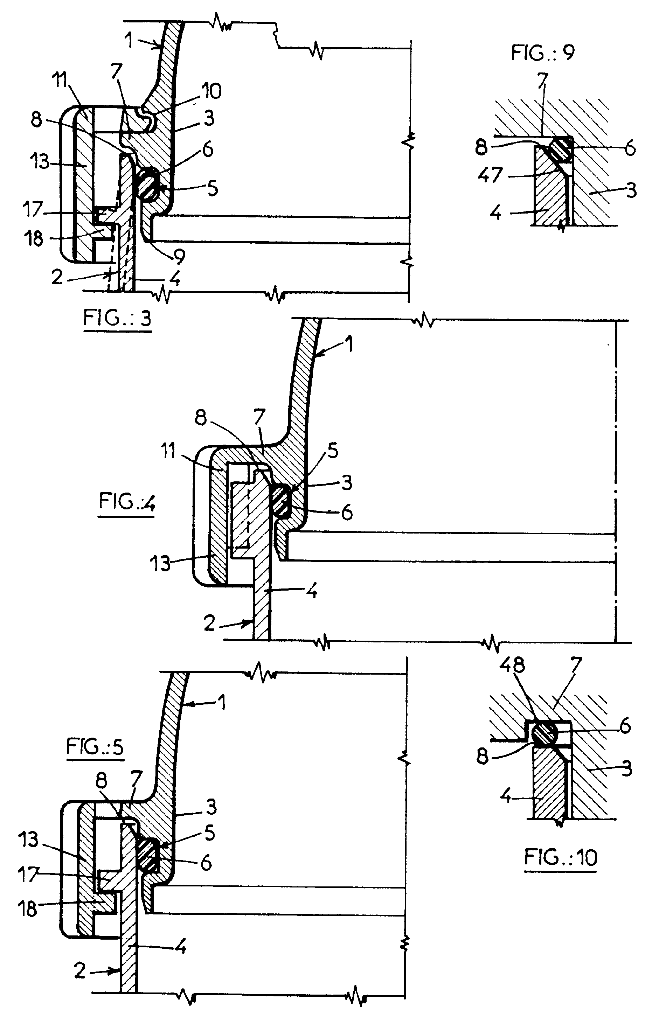

Le fonctionnement du système de serrage sera expliqué, pour des raisons de clarté, en s'aidant de la figure 3 qu'on va maintenant décrire.

On retrouve sur la figure 3 les mêmes éléments que sur la figure 1, il n'est donc pas nécessaire de les décrire à nouveau. Cependant, les filetages 12 et 14 portés par la partie cylindrique 4 et par la bague 11 ont été supprimés. A la place, la partie cylindrique 4 porte une série de saillants radiaux 17, dirigés vers l'extérieur, alors que la partie cylindrique 13 de la bague 11 porte une série de saillants radiaux 18, dirigés vers l'intérieur. Les saillants 17 sont des fragments d'une rainure radiale complète, de même que les saillants 18. Les intervalles séparant les saillants 17 sont supérieurs, en extension angulaire, à l'extension angulaire des saillants 18, et vice-versa. Quand le récipient est monté, les saillants 18 sont au-delà des saillants 17 par rapport au bord 8 de l'élément femelle, si bien que l'ensemble constitue un assemblage du type "à baïonnette" bien connu. Sur la figure 3, on a représenté en tirets, d'une manière approximative et schématique, la déformation que subissent les éléments 1 et 2 lorsque le récipient est en pression. La partie cylindrique 4 de l'élément femelle 2 se déforme peu dans la région avoisinant son bord 8. En effet, ce bord, étant isolé de l'intérieur du récipient par le joint étanche 6, n'est pas soumis à la pression. En revanche, la partie cylindrique se dilate de plus en plus fortement à mesure qu'elle s'écarte de ce bord 8. Comme les saillants 17 sont plus écartés du bord 8 que ne l'est le joint 6, ils s'écartent donc de façon sensible de l'axe xx' du récipient, et la surface extérieure de la partie cylindrique 4 vient porter contre le bord interne des saillants 8, ce qui crée des forces de frottement qui viennent s'ajouter à celles qui résultent du contact entre les saillants 17 et 18 adjacents. On obtient ainsi une immobilisation en rotation de la bague 11 par rapport à l'élément femelle 2. On notera que, au lieu que ce soit la face externe de la partie cylindrique 4 qui vient en appui sur les saillants 18, ce peut être la face intérieure de la partie cylindrique de la bague qui vient en contact avec les saillants 17. Le résultat est le même.

Dans le cas de la figure 1, la situation se présente de la même manière. Il faut cependant noter qu'un déplacement relativement faible de la partie cylindrique 4 portant le filetage 12, entraîne un serrage efficace filets de celui-ci contre le filetage 14 porté par la bague 11. On obtient ainsi, pour une déformation relativement faible, un blocage quasi parfait.

Les figures 4 et 5 montrent des dispositions analogues, respectivement, aux figures 1 et 3, la différence portant sur le fait que la bague 11, au lieu de tourner librement dans une rainure 10 de l'élément mâle, est solidaire de ce dernier, et conformée, par conséquent, comme une jupe. Cette disposition est moins coûteuse, mais elle peut obliger, pour procéder au montage et au démontage du récipient, à enlever les conduits qui peuvent par exemple être montés sur un embout 19 (figure 1) de l'un ou l'autre des éléments 1 ou 2. En outre, la déformation de l'élément 1 sous l'effet de la pression peut se répercuter sur la bague 11, si bien que, dans les mêmes conditions, le serrage risque d'être moins efficace.

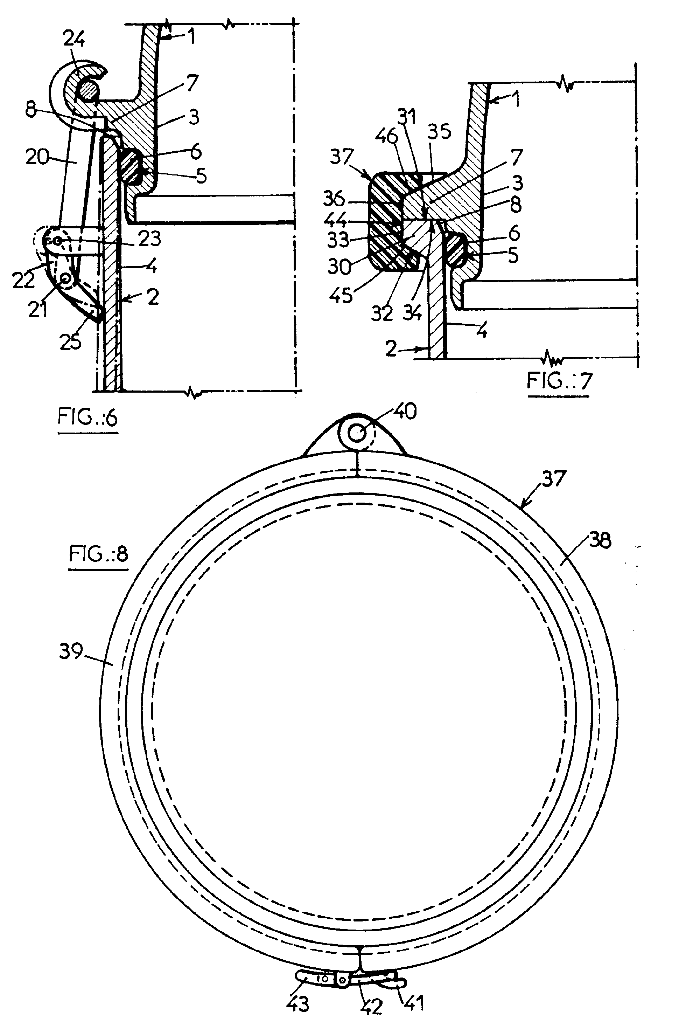

La figure 6 montre un autre dispositif d'assemblage, comprenant une bride 20, reliée par une articulation 21 à un levier 22, lui-même relié par une articulation 23 à la partie cylindrique 4. La bride 20 coopère avec un crochet 24 porté par le bourrelet 7. En abaissant, dans le sens de la figure, le levier 22, on dépasse un point mort, et l'ensemble est immobilisé. Il s'agit d'une fixation de type connu depuis longtemps, mais la particularité consiste dans le fait que l'articulation 23 est portée par une partie cylindrique 4 qui est déformable. Comme on l'a indiqué en pointillés, sous l'effet de la pression, la partie 4 se déforme, la disposition du levier 22 multiplie les déplacements, et l'extrémité 25 du levier opposée à l'articulation 23 vient fermement en appui contre la partie cylindrique 4, ce qui rend difficile ou impossible un soulèvement du levier, donc un démontage de l'ensemble, tant que le récipient est sous pression. Pour rendre plus difficile encore le soulèvement du levier, on peut prévoir que la face extérieure de la partie 4 présente un relief tel qu'il soit, par exemple, impossible d'engager les doigts sous le levier 22 quand il est fermement appuyé contre cette partie 4.

Bien entendu, pour obtenir la solidarisation complète des éléments 1 et 2, il faut prévoir plusieurs dispositifs analogues à celui qui est décrit à la figure 6, de préférence également répartis le long de la périphérie des éléments 1 et 2. L'un de ces dispositifs peut être remplacé par une articulation à axe tangentiel, cette articulation pouvant éventuellement être démontable.

Les figures 7 et 8 sont relatives à une réalisation de récipient selon l'invention qui diffère quelque peu des précédentes. On retrouve, sur la partie cylindrique 3, l'élément femelle 1, la gorge 5, qui contient le joint d'étanchéité 6, et le rebord extérieur d'arrêt 7. La partie cylindrique 4 de l'élément femelle 2 présente, comme précédemment, une surface interne lisse, mais elle est dépourvue d'organes d'accrochage plus écartés de son bord 8 que le joint d'étanchéité 6. Les moyens d'accrochage de la partie femelle sont constitués par un rebord 30 dirigé radialement vers l'extérieur, et adjacent au bord 7. Ce rebord présente une surface plane 31 du côté dirigé vers l'élément mâle, une surface conique 32 du côté opposé, et une surface externe cylindrique 33. Le rebord 7 de l'élément mâle présente, de façon symétrique, une surface plane 34 du côté dirigé vers l'élément femelle, une surface conique 35 du côté opposé, et une surface externe cylindrique 36. Les surfaces planes 31, 34 sont en appui l'une contre l'autre quand le récipient est fermé et les surfaces externes cylindriques 33 et 36 sont alors en prolongement. L'organe d'accrochage est constitué par une bride circulaire 37 en deux tronçons 38, 39 s'étendant chacun à peu près sur un demi-cercle, reliés à l'une de leurs extrémités par une articulation 40 et à l'autre par un système comprenant un crochet 41, une bride 42 et un levier articulé 43. Ce système est identique dans sa structure et son fonctionnement à celui qui a été décrit à propos de la figure 6 et il n'est pas nécessaire de les expliciter plus en détail.

En coupe, la bride 37 présente, sur sa face interne, une rainure à section trapézoïdale avec un fond 44 cylindrique et deux flancs coniques 45, 46 de conicité adaptée à celle des surfaces coniques 32 et 35 du rebord 30 et du rebord 7. Le rayon du fond cylindrique 44 est égal à celui des surfaces coniques 33 et 36. La bride 37 est en un matériau déformable, et plus précisément elle est susceptible de s'allonger de façon sensible dans le sens périphérique sous l'effet d'une contrainte radiale dirigée vers l'extérieur.

Lorsque le récipient est mis en pression, la coopération des surfaces coniques 32 et 35 avec les flancs coniques 45, 46 maintient les éléments mâle et femelle en position, cependant que le gonflement du récipient correspond à une augmentation du rayon des surfaces cylindriques 33 et 36, et par conséquent du fond cylindrique 44. Il en résulte un allongement périphérique de la bride 37 et par suite une augmentation du serrage du levier 43, de la même façon que cela est indiqué plus haut à propos du levier 25.

Il est à noter que la disposition décrite peut comporter plusieurs variantes :
- l'une des surfaces coniques 32, 35, ou les deux, peut être plane, le ou les flancs correspondants 45, 46 l'étant aussi,
- la bride 37 peut être en plus de deux tronçons, ou bien en un seul tronçon,
- les liaisons entre tronçons peuvent être à volonté des articulations, des systèmes à crochets, ou des liaisons d'autres types, à condition qu'il y ait au moins un système à crochet du type décrit, ou un système procurant le même résultat, à savoir le blocage lorsque le récipient est sous pression,
- parmi ces systèmes donnant le même résultat, on peut mentionner, par exemple, des systèmes à vis ou à baïonnette fonctionnant suivant les principes exposés à propos des figures 1 ou 3, les extrémités des tronçons adjacents jouant le rôle des parties cylindriques 2 et 4 de ces figures.

Sur les figures 1 et 3 à 7, le joint d'étanchéité 6 est logé dans une gorge 5 de la face extérieure de la partie cylindrique 3, et vient en appui contre la face intérieure de la partie cylindrique 4. Il est clair que la gorge pourrait être prévue sur la partie 4, ou sur les deux. Pour éviter la présence de telles gorges, qui peuvent affaiblir la paroi, on peut prévoir, comme indiqué à la figure 9, que le joint 6 est disposé de façon à être serré entre la paroi cylindrique 3 et sa nervure 7 d'un côté et le chanfrein 47 du bord 8 de la partie cylindrique 4. On peut aussi prévoir, comme indiqué à la figure 10, que le joint 6, logé dans une rainure annulaire 48 de la face plane de la nervure 7, est serré entre cette dernière et la face plane du bord 8. On notera que la disposition des figures 1 et 3 à 7 peut s'accomoder de légers déplacements axiaux relatifs des éléments mâle et femelle, ce que ne permettent pas les dispositions des figures 9 et 10, où le maintien de l'étanchéité exige un accrochage bien rigide. La réalisation de la figure 9, peut-être la moins sûre en ce qui concerne l'étanchéité, correspond en revanche à des formes d'une particulière facilité d'obtention.

**Revendications**

1. Récipient démontable, destiné à supporter une pression interne et comprenant un élément mâle (1) dont une partie cylindrique (3) pénètre dans une partie cylindrique (4) d'un élément femelle (2), et un joint d'étanchéité (6) intercalé entre ces deux parties cylindriques, dans lequel la surface extérieure de l'élément femelle porte des moyens d'accrochage (12, 17, 20 à 23, 30) aptes à coopérer avec des moyens d'accrochage (14, 18, 24, 46) prévus sur un organe de liaison (11, 37) solidaire en translation axiale de l'élément mâle, et caractérisé en ce que l'épaisseur de l'élément femelle (2) est calculée pour que, lorsque ladite pression interne est appliquée au récipient, celui-ci se déforme pour rendre impossible l'actionnement des moyens d'accrochage en vue de l'ouverture du récipient.

2. Récipient selon la revendication 1, caractérisé en ce que la distance entre les moyens d'accrochage 12, 17, 20 à 23, 30) portés par l'élément femelle (2) et le bord (8) de cet :élément est supérieure à la distance entre le joint d'étanchéité (6) et le même bord (8) de l'élément femelle.

3. Récipient selon la revendication 1 ou 2, caractérisé en ce que les moyens d'accrochage portés par l'élément femelle (2) sont constitués par un filetage mâle (12) calculé pour coopérer sans effort avec un taraudage (14) porté par l'organe de liaison (11) lorsque la pression interne est faible ou nulle, et pour se coincer dans ledit taraudage lorsque la pression interne est élevée.

4. Récipient selon la revendication 3, caractérisé en ce qu'il est prévu au moins une butée (16, 17) qui limite le vissage de l'organe de liaison (11) sur le filetage (12) de l'élément femelle (2).

5. Récipient selon la revendication 1 ou 2, caractérisé en ce que les moyens d'accrochage forment un assemblage du type à baïonnette et comprennent, sur l'élément femelle, des saillants (17) dirigés radialement vers l'extérieur et calculés pour coopérer avec un relief (18) adapté de l'organe de liaison, cet organe de liaison comportant en outre au moins une surface d'appui qui est serrée contre une surface extérieure de l'élément femelle lorsque celui-ci est déformé par la pression.

6. Récipient selon l'une des revendications 1 ou 2, caractérisé en ce que les moyens d'accrochage portés par l'élément femelle (2) comprennent au moins un système de serrage comprenant une bride (20) articulée sur un levier (22), articulé lui-même sur l'élément femelle (2), la bride coopérant avec un crochet (24) porté par l'organe de liaison, l'immobilisation relative des éléments étant obtenue par dépassement d'un point mort par le levier (22), la déformation de l'élément femelle sous l'effet de la pression entraînant une augmentation du dépassement de point mort.

7. Récipient selon la revendication 6, caractérisé en ce que la déformation de l'élément femelle sous l'effet de la pression déplace l'extrémité (25) du levier (22) qui est opposée à son articulation sur l'élément femelle et rapproche cette extrémité de l'élément femelle ou la serre contre celui-ci, rendant difficile ou impossible l'actionnement dudit levier quand le récipient est sous pression.

8. Récipient selon l'une des revendications 1 à 7, caractérisé en ce que l'organe de liaison est une bague (11) qui peut tourner autour de la partie cylindrique (3) de l'élément mâle (1).

9. Récipient selon l'une des revendications 1 à 7, caractérisé en ce que l'organe de liaison est une jupe(11) solidaire de l'élément mâle (1).

10. Récipient selon la revendication 1, caractérisé en ce que les moyens d'accrochage portés par l'élément mâle consistent en une nervure radiale (30) le long du bord (8) de cet élément, l'organe de liaison est constitué par une bride (37) circulaire à gorge qui vient entourer ladite nervure et une nervure (7) similaire de l'élément mâle, cette bride présentant au moins une discontinuité sur sa périphérie, les deux côtés (38, 39) de cette discontinuité étant réunis par un système de serrage qui se bloque lorsque la longueur périphérique de la bride augmente sous l'effet de l'augmentation de diamètre de l'élément femelle, et éventuellement de l'élément mâle, résultant de la pression interne.

11. Récipient selon la revendication 10, caractérisé en ce que le système de serrage comprend une bride (42) articulée sur un levier (43) lui-même articulé sur un premier tronçon (39), et un crochet (41) porté par l'autre tronçon (38), l'immobilisation relative de l'éléments mâle et femelle étant obtenue par dépassement d'un point mort du levier, l'allongement périphérique de la bride circulaire, sous l'effet de la pression, entraînant une augmentation du dépassement du point mort.

12. Récipient selon la revendication 11, caractérisé en ce que l'allongement périphérique de la bride circulaire sous l'effet de la pression déplace l'extrémité du levier (43) qui est opposée à son articulation sur le premier tronçon et rapproche cette extrémité dudit premier tronçon (39) ou la serre contre celui-ci, rendant difficile ou impossible l'actionnement dudit levier quand le récipient est sous pression.

13. Récipient selon l'une des revendications 10 à 12, caractérisé en ce que la bride circulaire (37) est en plusieurs tronçons articulés.

14. Récipient selon l'une des revendications 1 à 13, caractérisé en ce que le joint d'étanchéité (6) est logé dans une gorge radiale (5) d'une des parties cylindriques (3, 4).

15. Récipient selon l'une des revendications 1 à 13, caractérisé en ce que le joint d'étanchéité (6) est serré entre la partie cylindrique (3) de l'élément mâle (1), une nervure (7) de cette partie cylindrique et un chanfrein (47) du bord (8) de la partie cylindrique (4) de l'élément femelle (2).

16. Récipient selon l'une des revendications 1 à 13, caractérisé en ce que le joint d'étanchéité (6) est serré entre une nervure (7) de la partie cylindrique (3) de l'élément mâle (1), et le bord (8) de la partie cylindrique (4) de l'élément femelle (2).

**Patentansprüche**

1. Demontierbarer Behälter zur Aufnahme eines Innendrucks mit einem vorstehenden Element (1), von dem ein zylindrischer Teil (3) in einen zylindrischen Teil (4) eines zurückspringenden Elementes (2) eindringt, und einem zwischen die beiden zylindrischen Teile zwischengeschalteten Dichtungsgummi (6), wobei dei Außenfläche des zurückspringenden Elementes Befestigungsmittel (12, 17, 20 bis 23, 30) trägt, die mit Befestigungsmitteln (14, 18, 24, 46) zusammenwirken, welche an einem Verbindungselement (11, 37) vorgesehen sind, das gegenüber einer Axialverschiebung des vorstehenden Elementes Wiederstandsfähig ist, dadurch gekennzeichnet, daß die Stärke des zurückspringenden Elementes (2) derart berechnet ist, daß sich dieses bei Aufbringung des Innendrucks auf den Behälter verformt, um eine Betätigung der Befestigungsmittel im Hinblick auf ein Öffnen des Behälters unmöglich zu machen.

2. Behälter nach Anspruch 1, dadruch gekennzeichnet, daß der Abstand zwischen den vom zurückspringenden Element (2) getragenen Befestigungsmitteln (12, 17, 20 bis 23, 30) und dem Rand (8) diese Elementes größer ist als der Abstand zwischen dem Dichtungsgummi (6) und dem gleichen Rand (8) des zurückspringenden Elementes.

3. Behältr nach Anspruch 1 oder 2, daduch gekennzeichnet, daß die vom zurückspringenden Element (2) getragenen Befestigungsmittel durch ein außengewinde (12) gebildet sind, das ohne Belastung mit einem Innengewinde (14) zusammenwirkt, das das Verbindungselement (11) trägt, wenn der Innendruck schwach oder gleicht 0 ist, und das in dem Innengewinde festsitzt, wenn der Innendruck erhöht ist.

4. Behälter nach Anspruch 3, dadurch gekennzeichnet, daß er mit mindestens einem Anschlag (16, 17) versehen ist, der die Verschraubung des Verbindungselementes (11) mit dem Außengewinde (12) des zurückspringenden Elementes (2) begrenzt.

5. Behälter nach Anspruch 1 oder 2, dadurch gekennzeichnet, daß die Befestigungsmittel einen Bajonettverschluß bilden und auf dem zurückspringenden Element Vorsprünge (17) umfassen, die sich radial zur Außenseite hin erstrecken und derart ausgebildet sind, daß sie mit einer am Verbindungselement angebrachten Erhöhung (18) zusammenwirken, wobei das Berbindungselement desweiteren mindestens eine Lagerfläche umfaßt, die gegen eine Außenfläche des zurückspringenden Elementes geklemmt wird, wenn dieses durch Druck verformt ist.

6. Behälter nach Anspruch 1 oder 2, dadurch gekennzeichnet, daß die vom zurückspringenden Element (2) getragenen Befestigungsmittel mindestens ein Spannsystem umfassen, das einen Gurt (20) aufweist, der gelenkig an einem Hebel (22) befestigt ist, welcher gelenkig am zurückspringenden Element (2) befestigt ist, und der mit einem vom Verbindungselement getragenen Haken (24) zusammenwirkt, wobei die Verriegelung der Element relativ zueinander dadurch erreicht wird, daß der Hebel (22) einen Totpunkt überschreitet, und die Verformung des zurückspringenden Elementes unter der Druckwirkung eine Verstärdung dieser Totpunktüberschreitung mit sich bringt.

7. Behälter nach Anspruch 6, dadurch gekennzeichnet, daß durch die Verformung des zurückspringenden Elementes unter der Druckwirkung das äußere Ende (25) des Hebels (22), das der gelenkigen Lagerung am zurückspringenden Element gegenüberliegt, verschoben und an das zurückspringende Element angenähert wird bzw. dessen Klemmung gegen das Element erhöht wird, wodurch eine Betätigung des Hebels schwierig oder unmöglich wird, wenn der Behälter unter Druck steht.

8. Behälter nach einem der Ansprüche 1 bis 7, dadurch gekennzeichnet, daß das Verbindungselement ein Reif (11) ist, der sich um den zylindrischen Teil (3) des vorstehenden Elementes (1) herumdrehen kann.

9. Behälter nach einem der Ansprüche 1 bis 7, dadurch gekennzeichnet, daß das Verbindungselement eine einstückig mit dem vorstehenden Element (1) ausgebildete Schürze (11) ist.

10. Behälter nach Anspruch 1, dadurch gekennzeichnet, daß die vom vorstehenden Element getragenen Befestigungsmittel aus einer sich entlang dem Rand (8) dieses Elementes erstreckenden radialen Rippe (30) bestehen, daß das Verbindungselement durch einen kreisförmigen Gurt (37) mit Vertiefung gebildet ist, der die erwähnte Rippe sowie eine entsprechende Rippe (7) am vorstehenden Element umschließen kann, und daß dieser Gurt mindestens eine Kiskontinuität an seinem Umfang aufweist, deren beide Seiten (38, 39) durch ein Klemmsystem wiedervereinigt sind, wobei dieses Klemmsystem eine Verriegelung bewirkt, wenn sich die umfangslänge des Gurtes durch eine Vergrößerung des Durchmessers des zurückspringenden Elementes und schließlich des vorstehenden Elementes aufgrund des Innendrucks erhöht.

11. Behälter nach Anspruch 10, dadurch gekennzeichnet, daß das Klemmsystem einen Gurt (42) umfaßt, der an einem Hebel (43) gelenkig gelagert ist, welcher allein im ersten Abschnitt (39) gelenkig gelagert ist, sowie eine Haken (41), der vom anderen Abschnitt (38) getragen wird, wobei die Verriegelung des vorstehenden und zurückspringenden Elementes relativ zueinander durch Überschreiten eines Totpunktes des Hebels erreicht wird und die Dehnung des kreisförmigen Gurtes in umfangsrichtung unter der Druckwirkung eine Verstärkung der Überschreitung dieses Totpunktes mit sich bringt.

12. Behälter nach Anspruch 11, dadurch gekennzeichnet, daß durch die Dehnung des kreisförmigen Gurtes in Umfangsrichtung unter der Druckwirkung das äußere Ende des Hebels (43), das einer gelekigen Lagerung am ersten Abschnitt gegenüberliegt, verschoben und dem ersten Abschnitt (39) angenähert bzw. die entsprechende Klemmung erhöht wird, wodurch eine Betätigung des Hebels schwierig oder unmöglich wird, wenn der Behälter unter Druck steht.

13. Behälter nach einem der Ansprüche 10 bis 12, dadurch gekennzeichnet, daß der kreisförmige Gurt (37) aus mehreren gelenkig miteinander verbundenen Abschnitten besteht.

14. Behälter nach einem der Ansprüche 1 bis 13, dadurch gekennzeichnet, daß der Dichtungsgummi (6) in einer Radialvertiefung (5) von einem der zylindrischen Teile (3, 4) untergebracht ist.

15. Behälter nach einem der Ansprüche 1 bis 13, dadurch gekennzeichnet, daß der Dichtungsgummi (6) zwischen den zylindrischen Teil (3) des vorstehenden Elementes (1), eine Rippe (7) dieses zylindrischen Teiles und eine Seitenfase (47) am Rand (8) des zylindrischen Teiles (4) des zurückspringeden Elementes (2) geklemmt ist.

16. Behälter nach einem der Ansprüche 1 bis 13, dadurch gekennzeichnet, daß der Kichtungsgummi (6) zwischen eine Rippe (7) des zylindrischen Teiles (3) des vorstehenden Elementes (1) und den Rand (8) des zylindrischen Teiles (4) des zurückspringenden Elementes (2) geklemmt ist.

**Claims**

1. A removable vessel, intended to withstand an internal pressure and comprising a male element (1) having a cylindrical part (3) which fits into a cylindrical part (4) of a female element (2), and a sealing gasket (6) interposed between these two cylindrical parts, in which the external surface of the female element has attachment means (12, 17, 20 to 23) suitable for acting in conjunction with attachment means (14, 18, 24, 26) provided on a linking component (11, 37) connected in axial translation to the male element, and characterised in that the thickness of the female element (2) is calculated so that, when said internal pressure is applied to the vessel, the latter deforms in order to prevent actuation of the attachment means so as to open the Vessel.

2. A vessel according to Claim 1, characterised in that the distance between the attachment means (12, 17, 20 to 23, 30) on the female element (2) and the edge (8) of this element is greater than the distance between the sealing gasket (6) and the same edge (8) of the female element.

3. A vessel according to Claim 1 or 2, characterised in that the attachment means on the female element (2) comprises a male thread (12) calculated to act without effort in conjunction with a tap (14) on the linking component (11) when the internal pressure is low or nil, and to fit tightly into the said tap when the

4. A vessel according to Claim 3, characterised in that at least one stop (16, 17) is provided which limits the screwing motion of the linking component (11) on the thread (12) of the female element (2).

5. A vessel according to Claim 1 or 2, characterised in that the attachment means form an assembly of the bayonet type and comprise, on the female element, protrusions (17) directed radially towards the exterior and calculated to act in conjunction with an adapted contour (18) of the linking component, this linking component moreover comprising at least one bearing surface which is gripped against an external surface of the female element when the latter is deformed by the pressure.

6. A vessel according to one of Claims 1 or 2, characterised in that the attachment means on the female element (2) comprise at least one tightening system comprising an articulated strap (20) on a lever (22), itself articulated on the female element (2), the strap acting in conjunction with a hook (24) on the linking component, the relative fixing of the elements being achieved by the lever (22) passing a dead point, the deformation of the female element under the effect of the pressure causing an increase in the effect of passing of the dead point.

7. A vessel according to Claim 6, characterised in that the deformation of the female element under the effect of the pressure moves the end (25) of the lever (22) which is opposite to its articulation on the female element, and brings this end nearer to the female element or presses it against the latter, making the actuation of the said lever difficult or impossible when the vessel is pressurised.

8. A vessel according to any one of Claims 1 to 7, characterised in that the linking component is a ring (11) which can rotate around the cylindrical part (3) of the male element (1).

9. A vessel according to any one of Claims 1 to 7, characterised in that the linking element is a skirt (11) connected to the male element (1).

10. A vessel according to Claim 1, characterised in that the attachment means on the male element consist of a radial rib (3) having the length of the edge (8) of this element, the linking component is composed of a circular grooved strap (37) which surrounds said rib and a similar rib (7) of the male element, this strap having at least one discontinuity in its periphery, the two sides (38, 39) of this discontinuity being brought together by a gripping system which becomes blocked when the peripheral length of the strap increases under the effect of the increase in diameter of the female element and possibly of the male element resulting from the internal pressure.

11. A vessel according to Claim 10, characterised in that the gripping system comprises an articulated strap (42) on a lever (43), itself articulated on a first section (39), and a hook (41) on the other section (38), the relative fixing of the male and female elements being achieved by the lever passing a dead point, the peripheral elongation of the circular strap under the effect of the pressure causing an increase in the effect of passing of the dead point.

12. A vessel according to Claim 11, characterised in that the peripheral elongation of the circular strap under the effect of the pressure displaces the end of the lever (43) which is opposite its articulation on the first section, and brings this end nearer to the first section (39) or grips it against the latter, making the actuation of said lever difficult or impossible when the vessel is pressurised.

13. A vessel according to any one of Claims 10 to 12, characterised in that the circular strap (37) comprises a number of articulated sections.

14. A vessel according to any one of Claims 1 to 13, characterised in that the sealing gasket (6) is housed in a radial groove (5) in one of the cylindrical parts (3, 4).

15. A vessel according to any one of Claims 1 to 13, characterised in that the sealing gasket (6) is gripped between the cylindrical part (3) of the male element (1), a rib (7) on this cylindrical part and a chamfer (47) on the edge (8) of the cylindrical part (4) of the female element (2).

16. A vessel according to any one of Claims 1 to 13, characterised in that the sealing gasket (6) is gripped between a rib (7) on the cylindrical part (3) of the male element (1) and the edge (8) of the cylindrical part (4) of the female element (2).

FIG.:1

FIG.:2

FIG.: 3

FIG.:4

FIG.:5

FIG.: 9

FIG.:10

FIG.:6

FIG.:7

FIG.:8